(19) Europäisches Patentamt
European Patent Office
Office européen des brevets

(11) **EP 3 633 833 A1**

(12) **EUROPEAN PATENT APPLICATION**
published in accordance with Art. 153(4) EPC

(43) Date of publication:
**08.04.2020 Bulletin 2020/15**

(21) Application number: **18810631.4**

(22) Date of filing: **28.05.2018**

(51) Int Cl.:
*H02K 17/16* (2006.01)     *H02K 1/16* (2006.01)
*H02K 1/22* (2006.01)

(86) International application number:
**PCT/JP2018/020323**

(87) International publication number:
**WO 2018/221449 (06.12.2018 Gazette 2018/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2017 JP 2017109239**

(71) Applicants:
• **Kabushiki Kaisha Toshiba, Inc.
Tokyo 105-8001 (JP)**
• **Toshiba Infrastructure Systems &
Solutions Corporation
Kawasaki-shi, Kanagawa 212-0013 (JP)**

(72) Inventors:
• **TANIGUCHI Shun
Tokyo 105-8001 (JP)**
• **MISU Daisuke
Tokyo 105-8001 (JP)**
• **MATSUSHITA Makoto
Tokyo 105-8001 (JP)**
• **KAMIJO Yoshitake
Tokyo 105-8001 (JP)**
• **TAKEUCHI Katsutoku
Tokyo 105-8001 (JP)**
• **HASEBE Toshio
Tokyo 105-8001 (JP)**

(74) Representative: **AWA Sweden AB
Junkersgatan 1
582 35 Linköping (SE)**

(54) **ELECTRIC MOTOR**

(57)     An electric motor according to one embodiment includes a stator and a rotor. The stator has a stator core, stator teeth and stator slots. A stator coil is wound around the stator teeth, and the stator teeth are arranged in a circumferential direction. The stator slots are formed between the stator teeth adjacent to each other in the circumferential direction, and the stator coil is stored in the stator slots. The rotor has a rotor core, rotor teeth and rotor slots. The rotor core has a surface facing the rotor core in a radial direction. The rotor teeth are provided on the surface and are arranged in the circumferential direction. The stator slots are formed between the rotor teeth adjacent to each other in the circumferential direction, and conductor bars are stored in the rotor slots. When a natural number is referred to as m, the number of the stator lots is referred to as Nss, and a rotor skew angle at which the rotor slots are slanted with respect to a rotational axis is referred to as $\theta$rs, the rotor skew angle $\theta$rs is set in such a manner as to satisfy $\theta rs = 360/(Nss \cdot m)$.

F I G. 2

## Description

Technical Field

Embodiments described herein relate generally to an electric motor.

Background Art

One example of the electric motor is an induction electric motor. The induction electric motor is composed of a stator in which a stator coil is arranged around a substantially cylindrical stator core having a plurality of stator slots, and a rotor which is located on the inside in the radial direction of the stator and is provided in a rotatable manner with respect to the stator.

The rotor comprises a rotary shaft which is rotatable around a rotational axis, and a rotor core which is externally fitted and fixed to the rotary shaft. A plurality of rotor teeth extending in the radial direction are radially arranged in the rotor core, and rotor slots are formed between the rotor teeth which are adjacent to each other in the circumferential direction. Conductor bars are inserted in the rotor slots, respectively.

In the induction electric motor in the above-described configuration, when current is supplied to the stator coil, induction current is generated in the conductor bar (secondary conductor) by magnetic flux generated on the primary side (stator side). Consequently, rotary torque is applied to the rotor.

Here, since the primary side has the stator slot for storing the stator coil and the secondary side has the rotor slot for storing the conductor bar, spatial harmonic magnetic flux which does not contribute to the rotary torque of the rotor is generated. That is, the spatial harmonic magnetic flux generates harmonic secondary current in the conductor bar located near a minute gap between the stator and the rotor. The harmonic secondary current serves as resistance at the time of generating the induction current in the conductor bar, and causes a loss at the time of generating the rotary torque in the rotor. The loss is called a harmonic secondary copper loss.

Incidentally, the so-called skew structure for slanting the stator slots or the rotor slots with respect to the axial direction for the purpose of reducing torque ripples, noises and vibrations is known. However, even if the stator slots or the rotor slots are skewed for the purpose of reducing torque ripples, noises and vibrations, the influence of the spatial harmonic magnetic flux may not be reduced.

Citation List

Non Patent Literature

Non Patent Literature 1: Yukito TAKAHASHI, "Electric Device Design II -AC Generator and Induction Electric Motor-", Kyoritsu Shuppan Co., Ltd., 1956, pages 184 to 187

Summary of Invention

Technical Problem

Embodiments described herein aim to provide an electric motor which can reduce the influence of spatial harmonic magnetic flux.

Solution to Problem

According to one embodiment, an electric motor includes a stator and a rotor. The stator has a stator core, stator teeth and stator slots. A stator coil is wound around the stator teeth, and the stator teeth are arranged in a circumferential direction. The stator slots are formed between the stator teeth adjacent to each other in the circumferential direction, and the stator coil is stored in the stator slots. The rotor has a rotor core, rotor teeth and rotor slots. The rotor core has a surface facing the rotor core in a radial direction, and is provided in such a manner that the rotor core can rotate around a rotational axis with respect to the stator. The rotor teeth are provided on the surface and are arranged in the circumferential direction. The stator slots are formed between the rotor teeth adjacent to each other in the circumferential direction, and conductor bars are stored in the rotor slots. When a natural number is referred to as m, the number of the stator lots is referred to as Nss, and a rotor skew angle at which the rotor slots are slanted with respect to a rotational axis is referred to as θrs, the rotor skew angle θrs is set in such a manner as to satisfy θrs = 360/(Nss·m).

Brief Description of Drawings

FIG. 1 is a cross-sectional view of an electric motor of the first embodiment taken along a central axis.
FIG. 2 is a perspective view showing a state where conductor bars are inserted in a rotor core of the first embodiment.
FIG. 3 is a perspective view showing a state where a stator coil is arranged on a stator core of the second embodiment.
FIG. 4 is a cross-sectional view of an electric motor of the fourth embodiment taken orthogonally with respect to the central axis.

Mode for Carrying Out the Invention

Electric motors of embodiments will be described hereinafter with reference to the accompanying drawings.

(First Embodiment)

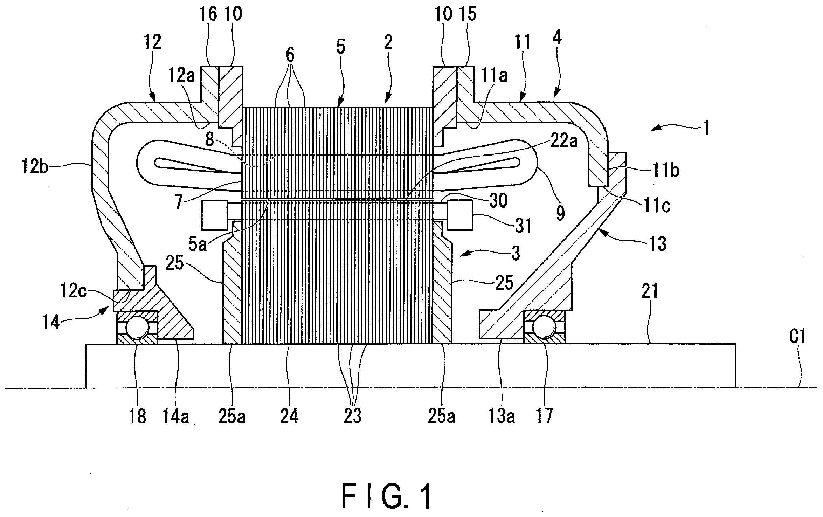

FIG. 1 is a cross-sectional view of an electric motor 1 taken along a central axis C and only shows a half of the electric motor 1 on one side of the central axis C.
The electric motor 1 is the so-called induction electric motor and is used for driving a train vehicle (not shown), for example.
As shown in FIG. 1, the electric motor 1 comprises a stator 2, a rotor 3 which is provided in a rotatable manner with respect to the stator 2, and a casing 4 which supports the stator 2 and the rotor 3. Note that the direction of the central axis C will be hereinafter referred to simply as an axial direction, the direction of rotation around the central axis C will be hereinafter referred to as a circumferential direction (rotational direction), and a direction orthogonal to the axial direction and the circumferential direction will be hereinafter referred to as a radial direction.
The stator 2 comprises a stator core 5 having a substantially cylindrical shape. The stator core 5 is formed by stacking a plurality of stator electromagnetic steel plates 6 in the axial direction. The stator electromagnetic steel plates 6 are thin steel plates manufactured by adding silicon to iron, for example.
In addition, a plurality of stator teeth 7 projecting toward the central axis C are formed on an inner peripheral surface 5a side of the stator core 5. The stator teeth 7 are arranged at regular intervals in the circumferential direction. In addition, the stator teeth 7 extend in the axial direction.
Furthermore, stator slots 8 are formed between the stator teeth 7 which are adjacent to each other in the circumferential direction. The stator slots 8 also extend in the axial direction. Furthermore, a stator coil 9 is wound around the stator teeth 7 via the stator slots 8. The stator coil 9 is provided in such a manner that the stator coil 9 overhangs outward in the axial direction from both ends in the axial direction of the stator core 5. For example, DC power supplied from a wire via a pantograph (both not shown) is converted into AC power and is supplied to the stator coil 9.
Furthermore, stator core holders 10 are provided at both ends in the axial direction of the stator core 5. The stator core holders 10 hold the stacked stator electromagnetic steel plates 6 (stator core 5) such that the stacked stator electromagnetic steel plates 6 will not be separated from each other. The stator core holders 10 have a substantially ring shape and are formed of metal such as iron, and the outer diameter of the stator core holders 10 is set to be greater than the outer diameter of the stator core 5. In addition, the inner diameter of the stator core holders 10 is set to be such an inner diameter that the stator core holders 10 do not contact the stator coil 9. The stator core 5 and the stator core holders 10 are integrated by welding, etc.
The rotor 3 comprises a rotary shaft 21 which is rotatable around the central axis C. That is, the central axis C and the rotational axis of the rotor 3 coincide with each other.
A rotor core 22 having a substantially columnar shape is externally fitted and fixed at a position corresponding to the stator 2 of the rotary shaft 21. The outer diameter of the rotor core 22 is set to such an outer diameter that a minute gap is formed between an outer peripheral surface 22a of the rotor core 22 and the stator teeth 7 of the stator 2. The minute gap should preferably be as small as possible.
The rotor core 22 is also formed by stacking a plurality of rotor electromagnetic steel plates 23 in the axial direction. In addition, at the center in the radial direction of the rotor core 22, a through hole 24 into which the rotary shaft 21 can be inserted or press-fitted is formed in a penetrating manner over the entire length in the axial direction. Consequently, the rotary shaft 21 and the rotor core 22 rotate in an integrated manner. In a case where the rotary shaft 21 is inserted into the rotor core 22, the rotor shaft 21 is integrated with the rotor core 22 by an adhesive, etc.
In addition, rotor core holders 25 having a substantially disk shape are provided at both ends in the axial direction of the rotor core 22. The rotor core holders 25 are also formed of metal such as iron, and at the centers in the radial direction, through holes 25a into which the rotary shaft 21 can be inserted or press-fitted are formed, respectively.
The rotor core holders 25 configured as described above have the function of holding the stacked rotor electromagnetic steel plates 23 (rotor core 22) such that the stacked rotor electromagnetic steel plates 23 will not be separated from each other or displaced in the axial direction with respect to the rotary shaft 21.

In addition, a plurality of rotor teeth 29 projecting outward in the radial direction (toward the stator teeth 7 side) are formed on the outer peripheral surface 22a side of the rotor core 22. The rotor teeth 29 are arranged at regular intervals in the circumferential direction. In addition, rotor slots 26 are formed between the rotor teeth 29 which are adjacent to each other in the circumferential direction. Conductor bars 30 having a rod shape are inserted in the rotor slots 26, respectively. The conductor bars 30 are formed of a conductive and nonmagnetic material such as copper or aluminum. Both ends in the axial direction of each conductor bar 30 project from the rotor core holders 25. Short-circuit rings 31 having a substantially ring shape are provided at these projecting ends. The conductor bars 30 are connected by these short-circuit rings 31. It is preferable that the material of the short-circuit rings 31 should be the same as the material of the conductor bars 30 and should be aluminum alloy or copper alloy, for example. However, the material of the short-circuit rings 31 is not limited to these materials.

In addition, rotor core holders 25 having a substantially disk shape are provided at both ends in the axial direction of the rotor core 22. The rotor core holders 25 are also formed of metal such as iron, and at the centers in the radial direction, through holes 24 into which the rotary shaft 21 can be inserted or press-fitted are formed, respectively.

The rotor core holders 25 configured as described above holds the stacked rotor electromagnetic steel plates 23 (rotor core 22) such that the stacked rotor electromagnetic steel plates 23 will not be separated from each other or displaced in the axial direction with respect to the rotary shaft 21.

The casing 4 which supports the stator 2 and the rotor 3 is composed of a pair of mirror covers 11 and 12 having a substantially bottomed cylindrical shape and arranged on both sides in the axial direction of the stator 2, and a pair of bearing brackets 13 and 14 which are integrated with the corresponding mirror covers 11 and 12.

The mirror covers 11 and 12 are arranged in such a state where openings 11a and 12a are directed to the stator core 5 side. In addition, outer flange portions 15 and 16 are formed at the outer circumferential edges of the openings 11a and 12a of the mirror covers 11 and 12, respectively.

The outer diameters of the outer flange portions 15 and 16 are set to be substantially the same as the outer diameter of the stator core holders 10. Consequently, the stator core holders 10 and the outer flange portions 15 and 16 of the mirror covers 11 and 12 overlap in the axial direction. Furthermore, the stator holders 10 and the outer flange portions 15 and 16 of the mirror covers 11 and 12 are fastened by bolts and nuts (not shown). Consequently, the stator 2 is supported on the mirror covers 11 and 12.

Openings 11c and 12c are formed at the centers in the radial direction of bottom portions 11b and 12b of the mirror covers 11 and 12, respectively. Corresponding bearing brackets 13 and 14 are provided in such a manner as to close the openings 11c and 12c, respectively. The bearing brackets 13 and 14 are integrated with the corresponding mirror covers 11 and 12, respectively.

The bearing brackets 13 and 14 have a substantially truncated cone shape and are arranged in such a manner as to project toward the stator 2. At the centers in the radial direction of the bearing brackets 13 and 14, insertion holes 13a and 14a into which the rotary shaft 21 which will be described later can be inserted are formed in a penetrating manner in the axial direction.

At the centers in the radial direction of the bearing brackets 13 and 14, bearing storage portions 13b and 14b are formed in a recessed manner on the outside in the axial direction, respectively. Bearings 17 and 18 are provided in the bearing storage portions 13b and 14b, respectively. The rotary shaft 21 is rotatably supported on the bearing brackets 13 and 14 via the bearings 17 and 18. The casing 4 is fixed under the floor of a train vehicle (both not shown).

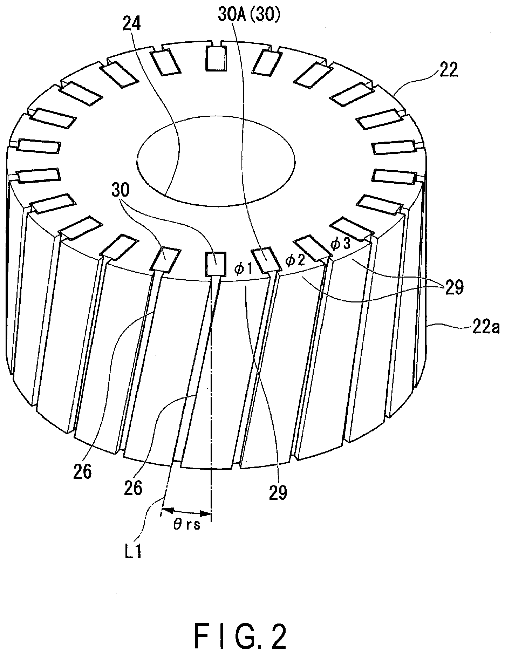

FIG. 2 is a perspective view showing a state where the conductor bars 30 are inserted in the rotor core 22. In FIG. 2, to simplify the explanation, the conductor bars 30 are cut with an end plane in the axial direction of the rotor core 22.

As shown in the drawing, in the rotor core 22, the rotor electromagnetic steel plates 23 are stacked one on top of another while being displaced from one another by a predetermined angle in the circumferential direction. Consequently, the rotor slots 26 of the rotor core 22 have a rotor skew angle $\theta rs$ such that the rotor slots 26 of the rotor core 22 are slanted with respect to the axial direction.

In other words, the rotor skew angle $\theta rs$ is, when arbitrary portions of the rotor slots 26 of the rotor electromagnetic steel plates 23 arranged at both ends in the axial direction of the rotor core 22 (on two rotor core holder 25 sides) are connected to each other by a straight line (for example, a straight line L1 shown in FIG. 2), an angle between the straight line and the axial direction.

Here, when a natural number is referred to as m and the number of the stator slots 8 of the stator 2 is referred to as Nss, the rotor skew angle $\theta rs$ is set in such a manner as to satisfy the following formula (1).

$$\theta rs = 360 / (N_{ss} \cdot m) \qquad\qquad\qquad \ldots (1)$$

That is, the rotor skew angle θrs is set based on the number of the stator slots 8, not the number of the rotor slots 26. In the present first embodiment, m = 1 and θrs = 360/Nss. However, m may be any natural number.

To operate the electric motor 1 in the above-described configuration, current is supplied to the stator coil 9 via an inverter (not shown). The inverter (not shown) is a control device for supplying current having a predetermined frequency to the stator coil 9. More specifically, three-phase AC current is supplied to the stator coil 9. As a result, main magnetic flux is formed in predetermined stator teeth 7 of the stator core 5. Subsequently, the stator teeth 7 in which the main magnetic flux is formed are sequentially switched in the rotational direction (circumferential direction) of the rotor 3 (the formed main magnetic flux shifts in a rotating manner).

In addition, the main magnetic flux flows through the rotor teeth 29 via the stator teeth 7. At this time, since the conductor bars 30 are inserted in the rotor slots 26, if the main magnetic flux of the stator 2 interlinks with the rotor slots 26 and the main magnetic flux changes, secondary current is generated in the conductor bars 30. By the secondary current and the magnetic flux of the stator 2, rotary torque is generated in the rotor 3.

Here, as described above, in addition to the main magnetic flux of the stator 2, spatial harmonic magnetic flux is also generated in the rotor core 22 due to the influence of the rotor slots 26. Since the spatial harmonic magnetic flux is generated near the minute gap between the stator 2 and the rotor 3, the spatial harmonic magnetic flux flows in such a manner as to pass in the circumferential direction through the rotor slots 26 (the conductor bars 30), and this causes the harmonic secondary copper loss of the electric motor 1. The reason why the harmonic secondary copper loss is reduced by setting the rotor skew angle θrs based on the above-described formula (1) will be described below.

For example, when current flowing through an arbitrary conductor bar 30A (30) shown in FIG. 2 is assumed to be current irn, the current irn is proportional to the difference in temporal differentiation between magnetic flux Φ1 and magnetic flux Φ2 which pass through the rotor teeth 29 located on both sides in the circumferential direction of the conductor bar 30A. That is, when numbers are sequentially assigned in the circumferential direction to the rotor teeth 29, the current irn which flows into the conductor bar 30 located between the nth rotor tooth 29 and the n+1th rotor tooth 29 satisfies the following formula (2).

$$i_{rn} \propto \frac{d\phi_{n+1}}{dt} - \frac{d\phi_n}{dt} \qquad \ldots (2)$$

In addition, when the harmonic magnetic flux generated due to the influence of the stator slots 8 when viewed the rotor 3 side and included in the magnetic flux Φ (hereinafter referred to as stator slot harmonic magnetic flux) is referred to as Φnh, the stator slot harmonic magnetic flux Φnh is considered to be proportional to fundamental magnetic flux Φn0. The fundamental magnetic flux Φn0 when viewed from the conductor bars 30 rotates at a slip frequency fs, and the phases of the stator slots 26 are shifted from one another by a mechanical angle of 2π/Nrs. Therefore, when the number of magnetic poles is referred to as p, the phases of the stator slots 26 are shifted from one another by an electrical angle of 2πp/Nrs. Consequently, the following formula (3) is established.

$$\phi_{nh} \propto \phi_{n0} \propto \sin\left\{2\pi\left(f_s t + \frac{p}{N_{rs}}n\right)\right\} \qquad \ldots (3)$$

On the other hand, a frequency fnh of the stator slot harmonic magnetic flux Φnh satisfies the following formula (4).

$$fnh = (\text{Frequency } f \text{ of inverter}) \times (\text{Number Nss of stator slots 8})/p \qquad \ldots (4)$$

Since the phases of the stator slots 26 are shifted from one another by the mechanical angle of 2π/Nrs, the following formula (5) is established.

$$\phi_{nh} \propto \sin\left\{\frac{N_{ss}}{p}\left(2\pi ft + p\frac{2\pi}{N_{rs}}n\right)\right\} \qquad \ldots (5)$$

If the above-described formula (5) is transformed, the following formula (6) can be obtained.

$$\phi_{nh} \propto \sin\left\{2\pi\left(\frac{N_{ss}}{p}ft + \frac{N_{ss}}{N_{rs}}n\right)\right\} \qquad \ldots(6)$$

In addition, based on the above-described formula (3) and the above-described formula (6), the following formula (7) can be obtained.

$$\phi_{nh} \propto \sin\left\{2\pi\left(f_st + \frac{p}{N_{rs}}n\right)\right\}\sin\left\{2\pi\left(\frac{N_{ss}}{p}ft + \frac{N_{ss}}{N_{rs}}n\right)\right\} \qquad \ldots(7)$$

If the above-described formula (2) is substituted into the above-described formula (7), the following formula (8) can be obtained.

$$i_{rnh} \propto 2\pi\frac{N_{ss}}{p}f\left[\begin{array}{l}\sin\left\{2\pi\left(f_st + \frac{p}{N_{rs}}(n+1)\right)\right\}\cos\left\{2\pi\left(\frac{N_{ss}}{p}ft + \frac{N_{ss}}{N_{rs}}(n+1)\right)\right\} \\ -\sin\left\{2\pi\left(f_st + \frac{p}{N_{rs}}n\right)\right\}\cos\left\{2\pi\left(\frac{N_{ss}}{p}ft + \frac{N_{ss}}{N_{rs}}n\right)\right\}\end{array}\right] \qquad \ldots(8)$$

Furthermore, if the above-described formula (8) is transformed and when the rotary skew angle is referred to as θrs, the number of the stacked rotor electromagnetic steel plates 23 is referred to as m and a position (position in sequence) where the rotor electromagnetic steel plate is stacked is referred to as k (k = 0 to m), the secondary spatial harmonic current in a case where the rotary slots 26 are skewed can be represented as the following formula (9).

$$i_{rnh} \propto 2\pi\frac{N_{ss}}{p}\left[\begin{array}{l}\sin\left\{2\pi\left(f_st + \frac{p}{N_{rs}}(n+1) + S\frac{k}{m}\right)\right\}\cos\left\{2\pi\left(\frac{N_{ss}}{p}ft + \frac{N_{ss}}{N_{rs}}(n+1) + \frac{N_{ss}}{p}S\frac{k}{m}\right)\right\} \\ -\sin\left\{2\pi\left(f_st + \frac{p}{N_{rs}}n + S\frac{k}{m}\right)\right\}\cos\left\{2\pi\left(\frac{N_{ss}}{p}ft + \frac{N_{ss}}{N_{rs}}n + \frac{N_{ss}}{p}S\frac{k}{m}\right)\right\}\end{array}\right] \qquad \ldots(9)$$

Here, since the rotor skew angle θrs (= S) is sufficiently less than 360 [deg], the sin component is hardly changed by the value k. Therefore, if the compound of the rotor electromagnetic steel plates 23 (the entire rotor core 22) of the cos components is zero, the primary component of the harmonic secondary current becomes approximately zero. Consequently, when a natural number is referred to as a, the rotor skew angle θrs (= S) is set in such a manner as to satisfy the following formula (10).

$$S = \frac{ap}{N_{ss}} \qquad \ldots(10)$$

As described above, the rotor core 22 of the above-described first embodiment is formed in such a manner that the rotor slots 26 have the rotor skew angle θrs. In addition, the rotor skew angle θrs is set in such a manner as to satisfy the above-described formula (1). Therefore, the harmonic secondary current generated in the conductor bars 30 inserted in the rotor slots 26 can be reduced, and the harmonic secondary copper loss of the electric motor 1 can be reduced, accordingly.

In the above-described first embodiment, a case where a = 1 is represented in the formula (10). However, the present invention is not limited to this example, and as long as the rotor skew angle θrs (= S) satisfies the above-described formula (10), the harmonic secondary copper loss of the electric motor 1 can be reduced.

(Second Embodiment)

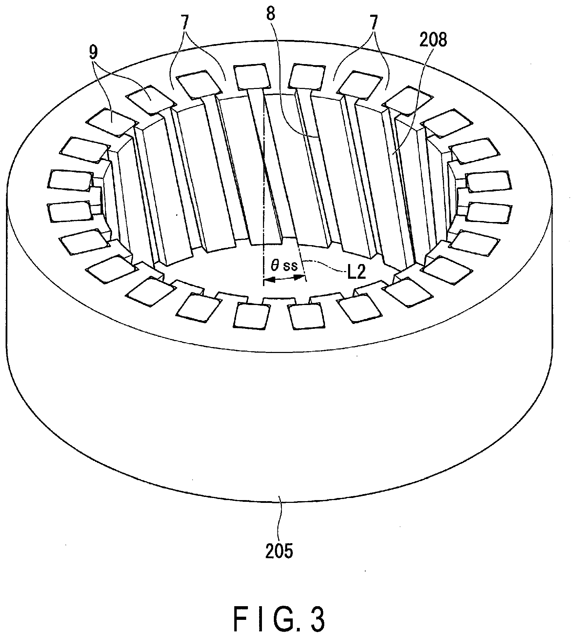

Next, the second embodiment will be described with reference to FIG. 3.

FIG. 3 is a perspective view showing a state where the stator coil 9 is arranged on the stator core 5. In FIG. 3, to simplify the explanation, the stator coil 9 is cut with an end plane in the axial direction of the stator core 5. In addition, the same constituent elements as those of the above-described first embodiment will be denoted by the same reference numbers and detailed descriptions will be omitted in the present second embodiment (the same applies to the subsequent embodiments).

The basic configuration of the present second embodiment is the same as that of the above-described first embodiment in that the electric motor 1 comprises the stator 2, the rotor 3 provided in a rotatable manner with respect to the stator 2, and the casing 4 supporting the stator 2 and the rotor 3, a stator 202 has a stator core 205 formed by stacking the stator electromagnetic steel plates 6, and the stator 3 has the rotor core 22 formed by stacking the rotor electromagnetic steel plates 23 (the same applies to the subsequent embodiments).

Here, the difference between the above-described first embodiment and the present second embodiment is that, while the rotor slows 26 of the rotor core 22 are skewed and the stator slots 8 of the stator core 5 are not skewed in the first embodiment, the rotor slots 26 of the rotor core 22 are not skewed and stator slots 208 of the stator core 205 are skewed in the second embodiment.

More specifically, in the stator core 205, the stator electromagnetic steel plates 6 are stacked one on top of another while being displaced from one another by a predetermined angle in the circumferential direction. Consequently, the stator slots 208 of the stator core 205 have a stator skew angle $\theta$ss such that the stator slots 208 are slanted with respect to the axial direction.

In other words, the stator skew angle $\theta$ss is, when arbitrary portions of the stator slots 208 of the stator electromagnetic steel plates 6 arranged on both sides in the axial direction of the stator core 205 (on two stator core holder 10 sides) are connected to each other by a straight line (for example, a straight line L2 shown in FIG. 3), an angle between the straight line and the axial direction.

Here, the stator skew angle $\theta$ss is set in such a manner as to satisfy the above-described formula (1). That is, the stator skew angle $\theta$ss is set based on the number of the stator slots 8, not the number of the rotor slots 26. In the present second embodiment, m = 1 and $\theta$ss = 360/Nss. However, m may be any natural number.

As described above, when the stator slots 208 are skewed instead of the rotor slots 26 in such a manner as to satisfy the above-described formula (1), similar effects to those of the above-described first embodiment can be produced.

(Third Embodiment)

Next, the third embodiment will be described.

In the present third embodiment, the stator slots 8 and the rotor slots 26 are not skewed, and the stator slots 8 and the rotor slots 26 extend in the axial direction. The third embodiment differs from the above-described first and second embodiments in this point.

In addition, in the present third embodiment, when a natural number is referred to as m and an integer greater than or equal to 0 is referred to as n, the number Nss of the stator slots 8 and the number Nrs of the stator slots 26 are set in such a manner as to satisfy the following formula (11). The present third embodiment differs from the above-described first and second embodiments in this point.

That is, the number Nss of the stator slots 8 and the number Nrs of the rotor slots 26 are set in such a manner as to satisfy the following formula (11).

$$N_{ss} = mN_{rs} \pm n \qquad\qquad \ldots (11)$$

The reason why the harmonic secondary copper loss is reduced by setting the number Nss of the stator slots 8 and the number Nrs of the rotor slots 26 in such a manner as to satisfy the above-described formula 11 will be described below.

That is, $2\pi p/Nrs$ is minute in the above-described formula (8). Therefore, when considered in a similar manner to the above-described first embodiment, the magnitude of the sin component hardly changes. If the number Nss of the stator slots 8 and the number Nrs of the rotor slots 26 are set in such a manner that the cos components become substantially the same, the secondary spatial harmonic current flowing through the conductor bars 30 is reduced, and consequently, the harmonic secondary copper loss is reduced. Here, to set the cos components to the same magnitude, the following formula (12) is established.

$$N_{SS}=mN_{rs} \qquad \dots(12)$$

From a perspective of reduction of the harmonic secondary copper loss, it is not necessary to set the cos components to the exactly same magnitude. That is, from a practical perspective, it is only necessary to satisfy the above-described formula (11).

Therefore, according to the above-described third embodiment, similar effects to those of the above-described first embodiment can be produced.

In the present third embodiment, for example, m = 1 and n = 2. However, the present invention is not limited to this example, and as long as the above-described formula (11) or the above-described formula (12) is satisfied, similar effects to those of the above-described first embodiment can be produced.

In addition, the above-described first to third embodiments have been described based on the assumption that the electric motor 1 is the so-called induction electric motor in which the conductor bars 30 inserted in the rotor slots 26 of the rotor core 22 are served as rotor bars, induction current is generated in the conductor bars 30 and rotary torque is thereby generated in the rotor 3. However, the conductor bars 30 of the electric motor 1 may be served as damper bars and the electric motor 1 may be configured as the so-called synchronous electric motor.

(Fourth Embodiment)

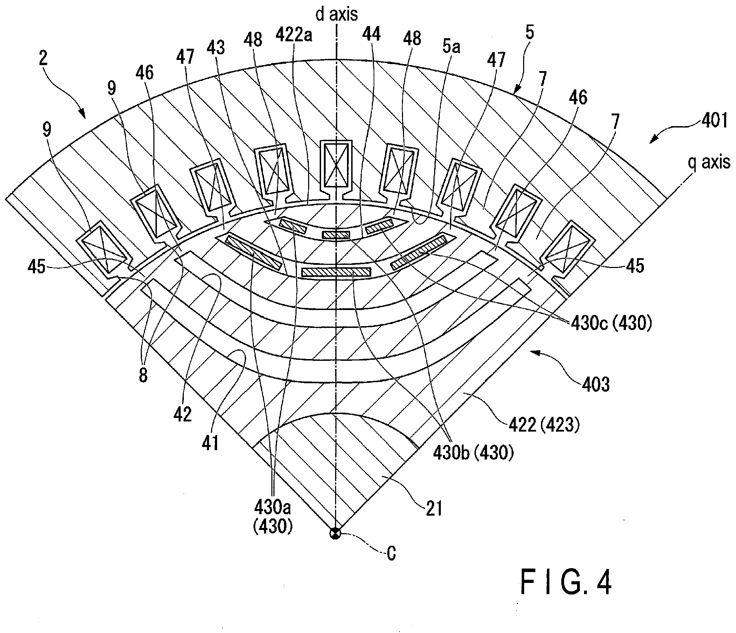

Next, the fourth embodiment will be described with reference to FIG. 4.

FIG. 4 is a cross-sectional view of an electric motor 401 taken orthogonally with respect to the central axis C. FIG. 4 only shows 1/4 sector of the electric motor 401, that is, the circumferential angle region of 1/4 circumference.

The electric motor 401 of the fourth embodiment is the so-called reluctance rotary electromotor in which reluctance torque is generated in the main magnetic flux of the stator 2 flowing into a rotor core 422 of a rotor 403 and the rotor 403 is thereby rotated. The fourth embodiment differs from the above-described first to third embodiments in this point.

Here, at the time of starting an ordinary synchronous reluctance rotary electromotor, it is necessary to detect a relative position between the stator core 5 and the rotor core 22 and supply current to a predetermined stator coil 9 based on the relative position. However, the electric motor 401 of the present fourth embodiment is the so-called self-starting synchronous reluctance rotary electromotor in which induction current is generated in conductor bars 430 using the conductor bars 430 and the synchronous reluctance rotary electromotor is thereby started without an inverter. The details are as follows.

Since the basic configuration of the stator 2 of the electric motor 401 is similar to that of the above-described first embodiment, the detailed description will be omitted.

The rotor core 422 of the rotor 403 is formed by stacking a plurality of rotor electromagnetic steel plates 423 in the axial direction. At the center in the radial direction of the rotor core 422, a through hole 24 which penetrates the rotor core 422 in the central axis C direction is formed. The rotary shaft 21 is press-fitted into the through hole 24, and the rotary shaft 21 and the rotor core 422 rotate in an integrated manner.

Furthermore, in each circumferential angle region of 1/4 circumference, four layers of hollows (flux barriers) 41, 42, 43 and 44 (a first hollow 41, a second hollow 42, a third hollow 43 and a fourth hollow 44) are formed and arranged in the radial direction. That is, the first hollow 41 is formed at a position closest to the rotary shaft 21 (on the innermost side in the radial direction of the rotor core 422), and the second hollow 42, the third hollow 43 and the fourth hollow 44 are sequentially formed from the first hollow 41 in the direction of distancing from the rotary shaft 21 (toward the outside in the radial direction). Subsequently, the fourth hollow 44 is arranged at a position farthest from the rotary shaft 21 (on the outermost side in the radial direction).

In addition, the hollows 41 to 44 are formed in such a manner as to extend along the flow of the magnetic flux formed when current is supplied to the stator coil 9. That is, each of the hollows 41 to 44 is curved in such a manner that the center in the circumferential direction is located furthest inside in the radial direction (each of the hollows 41 to 44 is convex toward the inside in the radial direction). Consequently, a direction in which magnetic flux flows easily and a direction in which magnetic flux does not flow easily are formed in the rotor core 422.

Here, in the present fourth embodiment, a direction in which magnetic flux flows easily is referred to as a q axis. In addition, a direction which is parallel to the radial direction and is electrically and magnetically orthogonal to the q axis is referred to as a d axis. That is, the follow portions 41 to 44 constitute a multilayer structure in the direction along the d axis.

More specifically, regarding the q axis direction in the rotor core 422, a direction in which the flow of magnetic flux is not prevented by the hollows 41 to 44 is referred to as the q axis. That is, positive magnetic potential is applied (for example, the north pole of a magnet is brought closer) to an arbitrary circumferential angle position on the outer peripheral surface 422a of the rotor core 422. In addition, negative magnetic potential is applied (for example, the south pole of a magnet is brought closer) to another arbitrary circumferential angle position which is displaced by one pole (by a mechanical angle of 90 degrees in the present embodiment) from the positive magnetic potential. A direction from the central axis C toward an arbitrary position at which the magnetic flux flows most in the above-described case where the position of the positive magnetic potential and the position of the negative magnetic potential are displaced from each other in the circumferential direction is defined as the q axis. Furthermore, the longitudinal direction of each of the hollows 41 to 44 is the q axis.

On the other hand, a direction in which the flow of the magnetic flux is prevented by the hollows 41 to 44, that is, a direction which is magnetically orthogonal to the q axis is referred to as the d axis. In the present embodiment, a direction parallel to a direction in which two rotor core portions separated into a region close to the central axis C and a region far from the central axis C by the hollows 41 to 44 is the d axis. In addition, in a case where the hollows 41 to 44 constitute multiple layers (four layers in the present embodiment) as is the case in the present embodiment, a direction in which the layers overlap one another is the d axis. In the present fourth embodiment, the d axis is not limited to the direction electrically and magnetically orthogonal to the q axis and may cross the q axis with a certain angular width (for example, a mechanical angle of about 10 degrees) from an angle at which the d axis is orthogonal to the q axis.

Consequently, the rotor core 422 has four poles, and the four layers of the hollows 41 to 44 are formed for each pole (the circumferential angle region of 1/4 circumference of the rotor core 422). In addition, one pole is the region between the q axes. That is, each of the hollows 41 to 44 is curved toward the inside in the radial direction such that each of the hollows 41 to 44 is located furthest inside in the radial direction on the d axis.

Furthermore, each of the hollows 41 to 44 is curved in such a manner that both ends in the longitudinal direction when viewed from the central axis C direction are located near the outer peripheral surface 422a of the rotor core 422. Furthermore, each of the hollows 41 to 44 is formed in such a manner that each of the hollows 41 to 44 becomes more parallel to the q axis as it is closer to both ends in the longitudinal direction and becomes more orthogonal to the d axis as it is closer to the center in the longitudinal direction.

In addition, bridges 45, 46, 47 and 48 (first bridges 45, second bridges 46, third bridges 47 and fourth bridge 48s) are formed between both ends in the longitudinal direction of the hollows 41 to 44 and the outer peripheral surface 422a of the rotor core 422 in the q axis direction, respectively.

Here, three conductor bars 430 (430a, 430b and 430c) are inserted in each of the third hollow 43 and the fourth hollow 44 of the hollows 41 to 44. The three conductor bars 430 are arranged at regular intervals in the longitudinal direction in the corresponding one of the hollows 43 and 44. More specifically, one of the three conductor bars 430 (the conductor bar 430b) is arranged on the d axis of each of the hollows 43 and 44. In addition, conductor bars 430 (the conductor bars 430a and 430c) are arranged respectively on both sides in the longitudinal direction of each of the hollows 43 and 44. Each of the conductor bars 430a and 430c arranged on both sides in the longitudinal direction of each of the hollows 43 and 44 is spaced apart from the corresponding one of the bridges 47 and 48 by a predetermined gap.

In addition, rotor core holders (not shown) are provided at both ends in the axial direction of the rotor core 422, and the rotor core holders and the rotor core 422 are integrated with the rotor shaft 21. In each conductor bar 430 arranged in the rotor core 422, both ends in the axial direction project outward in the axial direction from the rotor core holders. Short-circuit rings (not shown) having a substantially ring shape are provided at these projecting ends in the axial direction. The conductor bars 430 are connected by these short-circuit rings.

To operate the electric motor 401 in the above-described configuration, three-phase AC current is supplied to the stator coil 9 of the stator 2. Consequently, main magnetic flux is formed in predetermined stator teeth 7 of the stator core 5. Subsequently, the stator teeth 7 in which the main magnetic flux is formed are sequentially switched in the rotational direction (circumferential direction) of the rotor 3 (the formed main magnetic flux shifts in a rotating manner).

At this time, in an asynchronous state until the rotor 3 in a shutdown state starts to rotate in synchronization with the rotational shift of the main magnetic flux on the stator 2 side, secondary current is generated in the conductor bars 430 provided in the rotor core 422. That is, each conductor bar 430 generates starting torque for rotating the rotor 3 between the conductor bar 430 and the stator 2.

As described above, in the electric motor 401 which is a self-starting synchronous reluctance rotary electromotor, the conductor bars 430 function as damper bars. The hollows 41 to 44 of the rotor core 422 of the electric motor 401 are skewed, and the skew angle of the hollows 41 to 44 is set to the above-described rotor skew angle θrs. The rotor skew angle θrs is set in such a manner as to satisfy the above-described formula (1). As a result, similar effects to those of the above-described first embodiment can be produced.

In the electric motor 401, the stator slots 8 of the stator core 5 are skewed, and the skew angle of the stator slots 8 is set to the above-described stator skew angle θss. The stator skew angle θss is set in such a manner as to satisfy the above-described formula (1). As a result, similar effects to those of the above-described second embodiment can be produced.

According to at least one of the above-described embodiments, it is possible to reduce the harmonic secondary copper loss of the electric motor 1 or 401 by setting the rotor skew angle θrs of the rotor slots 26 of the rotor 3 or the hollows 41 to 44 of the rotor 402 or the stator skew angle θss of the stator slots 208 of the stator 2 in such a manner as to satisfy the above-described formula (1) or by setting the number Nss of the stator slots 8 and the number Nrs of the rotor slots 26 in such a manner as to satisfy the above-described formula (11) or the above-described formula (12) .

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A electric motor comprises:

   a stator comprising a stator core, a plurality of stator teeth around which a stator coil is wound and which are arranged in a circumferential direction, and a plurality of stator slots which are formed between the stator teeth adjacent to each other in the circumferential direction and in which the stator coil is stored; and
   a rotor comprising a rotor core which has a surface facing the stator core in a radial direction and is provided in such a manner that the rotor core can rotate around a rotational axis with respect to the stator, a plurality of rotor teeth which are provided on the surface and are arranged in the circumferential direction, and a plurality of rotor slots which are formed between the rotor teeth adjacent to each other in the circumferential direction and in which conductor bars are stored, wherein
   when a natural number is referred to as m, a number of the stator slots is referred to as Nss, and a rotor skew angle at which the rotor slots are slanted with respect to the rotational axis is referred to as θrs, the rotor skew angle θrs is set in such a manner as to satisfy θrs = 360/(Nss·m).

2. A electric motor comprising:

   a stator comprising a stator core, a plurality of stator teeth around which a stator coil is wound and which are arranged in a circumferential direction, and a plurality of stator slots which are formed between the stator teeth adjacent to each other in the circumferential direction and in which the stator coil is stored; and
   a rotor comprising a rotor core which has a surface facing the stator core in a radial direction and is provided in such a manner that the rotor core can rotate around a rotational axis with respect to the stator, a plurality of rotor teeth which are provided on the surface and are arranged in the circumferential direction, and a plurality of rotor slots which are formed between the rotor teeth adjacent to each other in the circumferential direction and in which conductor bars are stored, wherein
   when a natural number is referred to as m, a number of the stator slots is referred to as Nss, and a stator skew angle at which the stator slots are slanted with respect to the rotational axis is referred to as θss, the stator skew angle θss is set in such a manner as to satisfy θss = 360/(Nss·m).

3. A electric motor comprising:

   a stator comprising a stator core, a plurality of stator teeth around which a stator coil is wound and which are arranged in a circumferential direction, and a plurality of stator slots which are formed between the stator teeth adjacent to each other in the circumferential direction and in which the stator coil is stored; and
   a rotor comprising a rotor core which has a surface facing the stator core in a radial direction and is provided in such a manner that the rotor core can rotate around a rotational axis with respect to the stator, a plurality of rotor teeth which are provided on the surface and are arranged in the circumferential direction, and a plurality of rotor slots which are formed between the rotor teeth adjacent to each other in the circumferential direction and in which conductor bars are stored, wherein
   when a natural number is referred to as m, an integer greater than or equal to 0 is referred to as n, a number of the stator slots is referred to as Nss, and a number of the rotor slots is referred to as Nrs, the number Nss of the stator slots and the number Nrs of the rotor slots satisfy Nss = m·Nrs±n.

4. The electric motor of any one of claims 1 to 3, wherein
   the electric motor is an induction electric motor, and
   the conductor bars function as rotor bars.

**5.** The electric motor of any one of claims 1 to 3, wherein the electric motor is a synchronous electric motor, and the conductor bars function as damper bars.

FIG.1

FIG.2

F I G. 3

F I G. 4

EP 3 633 833 A1

**EP 3 633 833 A1**

## INTERNATIONAL SEARCH REPORT

| | International application No. |
|---|---|
| | PCT/JP2018/020323 |

**A. CLASSIFICATION OF SUBJECT MATTER**
Int.Cl. H02K17/16(2006.01)i, H02K1/16(2006.01)i, H02K1/22(2006.01)i

According to International Patent Classification (IPC) or to both national classification and IPC

**B. FIELDS SEARCHED**

Minimum documentation searched (classification system followed by classification symbols)
Int.Cl. H02K17/16, H02K1/16, H02K1/22

Documentation searched other than minimum documentation to the extent that such documents are included in the fields searched
Published examined utility model applications of Japan       1922–1996
Published unexamined utility model applications of Japan     1971–2018
Registered utility model specifications of Japan             1996–2018
Published registered utility model applications of Japan     1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-155246 A (GENERAL ELECTRIC CO.) 08 June 1999, paragraphs [0019]–[0020], [0030], fig. 1–2, 6 & US 5894182 A, column 4, lines 10–29, column 7, lines 6–25, fig. 1–2, 6 & EP 898354 A1 | 1, 4<br>5 |
| X<br>Y | WO 2016/080284 A1 (TOSHIBA CORP.) 26 May 2016, paragraphs [0010]–[0016], [0038], fig. 1–3 & US 2017/0237322 A1, paragraphs [0020]–[0032], [0069]–[0070], fig. 1–3 | 3–4<br>2, 4–5 |

☒  Further documents are listed in the continuation of Box C.         ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 16 August 2018 (16.08.2018) | 28 August 2018 (28.08.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
|---|
| PCT/JP2018/020323 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-80944 A (TOYOTA MOTOR CORP., MATSUO INDUSTRIES, INC.) 11 March 2004, claim 3, paragraph [0037], fig. 4-6 (Family: none) | 2, 4-5 |
| Y | JP 2015-106984 A (TOSHIBA MITSUBISHI-ELECTRIC INDUSTRIAL SYSTEMS CORP., MITSUBISHI ELECTRIC CORP.) 08 June 2015, paragraph [0013] (Family: none) | 5 |
| A | JP 2012-85477 A (HITACHI, LTD.) 26 April 2012, all drawings, entire text & US 2012/0091850 A1, entire text, all drawings | 1-5 |
| A | JP 2013-219906 A (NIDEC CORPORATION) 24 October 2013, paragraph [0053] & CN 202818042 U | 1-5 |
| A | US 2016/0308427 A1 (GM GLOBAL TECHNOLOGY OPERATIONS LLC) 20 October 2016, entire text, all drawings & US 2014/0246943 A1 & CN 104022583 A | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUKITO TAKAHASHI.** Electric Device Design II -AC Generator and Induction Electric Motor. Kyoritsu Shuppan Co., Ltd, 1956, 184-187